# EUROPEAN PATENT APPLICATION

(11) **EP 3 241 812 A1**
(43) Date of publication of application: **08.11.2017**
(21) Application number: 14909564.8
(22) Date of filing: 30.12.2014
(51) Int. Cl.: C04B 18/06, C04B 18/30

(54) **MORTAR OR CONCRETE PRODUCED WITH A HYDRAULIC BINDER**

(71) Applicant: Envirocem, S.L., 28028 Madrid (ES)
(72) Inventor: BURGOS ENRIQUEZ, Enrique, E-28028 Madrid (ES)
(74) Representative: Urizar Anasagasti, Jesus Maria
(86) International application number: PCT/ES2014/070995
(87) International publication number: WO 2016/107936

(57) **Abstract**

The invention relates to mortar or concrete produced with a hydraulic binder, comprising aggregates from cinders from the bottom of municipal waste incinerators and/or from slurry from wastewater treatment plants, or other natural or artificial aggregates, of different particle sizes depending of the use thereof as mortar or concrete, and a binder consisting of: glass and/or other pozzolans; pure Portland clinker with gypsum or plaster of Paris, or the resulting cements following the grinding thereof; and/or optionally lime, depending on the quantity of glass and/or pozzolans; all of the materials forming the base of the binder being ground and mixed together until a binder is obtained, together with the aggregates, with cementing mineral neoformations and a strong pozzolanic character.

## Description

### Object of the invention

The object of the present invention is to use bottom ash of household waste and municipal solid waste incinerators, as well as ash from slurry from wastewater treatment plants, and proceed with the recycling thereof, with technical ecological and commercial applications. Another object of the present invention is to create ecological hydraulic conglomerates and binders applied to said objective.

### Background of the invention

Bottom ash mainly consists of silicon salts and oxides, calcium, sodium, potassium, aluminum and heavy metals. Their weight is between 25 and 35% of the initial waste.

The amount of household and industrial waste generated by people in the world is enormous. To minimize the volume of waste generated, one alternative to reducing and transforming waste is incineration, which is done in modern industrial facilities which carry out said function, making a strong effort to contain the contamination of this controlled combustion, and even using the process to convert said waste into usable energy. However, this incineration produces waste known as bottom ash or slag. These by-products of incineration, which, in Europe alone, produce more than 500,000 TM, constitute a serious environmental problem, mainly due to the high volume of what is known as bottom ash, and, in a much lower amount, what is known as fly ash, since they contain heavy metals that are highly toxic and harmful to the environment and human beings. Much of this ash is dumped on controlled landfills, in some cases highly protected (fly ash) and in other cases and countries it is used in the field of construction in a limited way and after previously being treated (bottom ash).

By means of this inventive method we seek to reduce part of the problems which have to do with the limited use thereof, in addition to achieving a more extensive and intensive use thereof, and contribute to the recycling and marketing thereof by means of a simple method which makes use of other waste materials that often end up at the landfill.

### Description of the invention

The invention pursues the formation of a highly reactive hydraulic binder based on the homogenous mixture of glass and pozzolans, both natural and artificial, used alone or mixed together with Portland cement and, optionally, with a strong base, such as lime.

With this hydraulic binder mixed with cinders from the bottom of municipal waste incinerators in an aggregate form, we will be able to create cement and mortar suitable for many applications in the world of construction.

By means of the homogenous mixture of bottom ash of incinerators, converted into slag in the different particle groups which produce this slag after a treatment, which consists of the separation of slag and fly ash, carrying out techniques of adaptations such as:
- Cooling the slag in water immediately after they come out of the incinerator
- Using magnets for deironization
- Demineralization using Eddy currents
- Sifting the slag with a maximum prefixed filter
- Eliminating the finest fractions in order to remove a large part of the heavy metals
- Storing the slag in open air for 1 to 3 months, maintaining the optimal Proctor moisture level.

Likewise, we will use cinders/slag from slurry from wastewater treatment plants (WWTP) transformed into slag.

Water is added to this bottom ash or slag in accordance with the moisture study for said slag, as well as a complex of materials made up of: household or industrial cullet, either of one color or a mixture of several different types of glass with regard to the additives thereof, and/or different colors, this glass being preferable in the invention and, alternatively, other natural or artificial pozzolans, the artificial pozzolans being a by-product of industrial or agricultural processes, which have more than 70% of the total main oxides of (SiO2, A1203, Fe2O3), alone or mixed with others, including glass.

Types of pozzolans suitable for the invention:
Among other artificial pozzolans, we may use as an example:
   - The main bottom ash from the incineration of municipal solid waste. This slag, previously treated and ground, is activated as pozzolan.
   - Fly ash: ash produced by the combustion of mineral coal (lignite), mainly in thermal power stations.
   - Clays artificially activated or calcined: for example, waste from fired clay bricks and other types of clay have been subjected to temperatures above 800°C.
   - Slag from smelting: mainly from smelting of ferrous alloys in blast furnaces. This slag must be forcibly cooled in order to achieve an amorphous structure.
   - Ash from agricultural waste: the ash of rice husk, as well as ash from bagasse and sugarcane straw. When they are conveniently burned, a mineral waste rich in silica and alumina is obtained, the structure of which depends on the combustion temperature.
   - Silica fume from industrial processes (0.5 microns)

Natural pozzolans: Natural pozzolanic materials are made up mainly of eruptive rocks and, in particular, effusive and volcanic rocks, and within this group, intrusive rocks, with the exception of rocks of organic nature which formed through sediments.

These pozzolans, among others, can be used individually, mixed together, or mixed with micronized glass (which is a very reactive pozzolan) in different proportions, in turn mixed together with pure white or grey Portland Clinker, or with a carefully calculated amount of gypsum (CaSO)₄. 2H₂O or plaster of Paris CaSO₄. ½ H₂O), or with resulting cements in their different types and optionally, depending on the amount of glass and/or pozzolans, a strong base, preferably lime, which alone or together with Portland cement activate and quickly react with the hydroxides present in the pozzolans solution, releasing silicate, sodium and calcium, a precursor of the calcium and sodium silicates which will constitute the main cementing element. The entire complex of materials is subjected to the grinding of these components, until achieving a micronized glass and reactive conglomerate, with a similar fineness in its entirety. Or rather, until achieving the simple homogenous and intimate mixture of components of the complex of materials previously described and selected, these having already been individually micrometrically ground, preferably into a similar fineness, in mills which, of the many types that exist, we will not bother with classifying them, given that what we seek is a granulometric fineness lower than 60 microns in the 90th percentile, optimal at 45 microns in the 90th percentile (Blaine Method 250-300 kg/m^2) similar to Portland cement, although in order to maximize the reactivity thereof without making it excessively expensive, all that we reduce to 45 microns through micronization will cause a notable increase in the general properties sought after.

Pozzolans generally produce highly beneficial effects when used with cement and even positively interact with the ash and slag of the study. Among the advantages of pozzolans, in combination with cements and ash or slag of incinerators and wastewater treatment plants (WWTP) applied in the present invention, many of the practical and ecological applications thereof may be deduced:
A. In mechanical resistance
   A.1 In the long term, by prolonging the hardening period
   A.1.1 In traction
   A.1.2 In compression
   A.1.3 Better traction - compression relationship
B. In stability
   B.1 With respect to the expansion due to free lime
   B.2 With respect to the expansion due to sulfates
   B.3 With respect to the expansion due to alkali - aggregate reaction
   B.4 With respect to the hydraulic shrinkage during drying, due to the lower water/cement relationship (w/c)
   B.5. With respect to thermal shrinkage due to cooling
   B.6 With respect to the figure
C. In durability
   C.1 With respect to attacks from pure and acidic water
   C.2 With respect to attacks from sulfated water and soil
   C.3 With respect to attacks from seawater
   C.4 With respect to decomposition and fermentation gases of organic materials
   C.5 With respect to the disintegration due to alkali - aggregate reaction
D. In efficiency and economy
   D.1 Lowering the w/c relationship
   D.2 Reducing segregation
   D.3 Avoiding exudation and bleeding
E. In thermal behavior
   E.1 By releasing less heat of hydration
F. In impermeability
   F.1 Reducing porosity
   F.2 Avoiding efflorescence
   F.3 Producing greater amounts of hydrated silicate
G. In adhesion
   5.1 From the aggregate to the paste
   G.2 From the mortar to the reinforcements

The weight percentage distribution of the different materials which mix and/or are ground into microns, for the formation of hydraulic binder, will depend on the specific application for which it is intended to be used, always seeking the most economic option of materials, with regard to the access thereof, prices and distance to the area in which they will be used.

The slag from the municipal waste incinerator or waste water treatment plants, or the limestone or silicon aggregates, either mixed with the slag or alone, are present in the total mixture in a proportion, in weight, comprised between 5% and 80%.

The different components of the binder are present in the total mixture, in weight, in the following proportions:
- Glass and/or other pozzolans in the different varieties thereof or the different mixtures of other pozzolans, or individually ... 5 to 80%;
- Clinker or Portland cement ... 0 to 90%;
- Lime in its different forms ... 0 to 40%.

Aggregates coming from cinders of the bottom of municipal waste incinerators and/or slurry from waste water treatment plants, are also able to be used as pozzolans, as long as they are ground until reaching a grain size comprised between 0.5 and 80 microns in the 90th percentile, separate or together with the remaining components which make up the binder.

In cases in which the binder does not include Portland cement or Portland Clinker with gypsum or plaster of Paris, the relationship between the lime and pozzolans is comprised between 80/20 and 20/80.

The conglomerate which will be added to the ash may be composed of a large scale of percentages and components, as long as the pozzolans which will be used have 60% of the total main oxides of (SiO₂ , Al₂O₃, Fe₂O₃), alone or mixed with others, including glass. By way of example, we will use a mixture of:
- MICRONIZED: Micronized glass at 17 microns p.50, soda-lime, glass from the remaining classification of bottle glass of all colors for the recycling thereof
- CEMENT: Type 1 Portland Cement, specifically 52.5 N-SR5 UNE 80303-1/197-1

We used a percentage amount of 20% of the described cement, which was used as a standard sample. Likewise, we used the aforementioned glass, which has been mixed with the cement in intervals of 10, starting at 20%. Added to the cement and glass mixture was bottom ash:
- 0/4 FINE PARTICLES, 0/4 SAND, 0/32 BOTTOM ASH, all of the previously expressed amounts are represented in table 1, which are: bottom ash, from municipal solid waste incinerators and/or slurry from WWTP, classified and previously treated at variable grain sizes, which frequently mixed with Type 1 cement, 52.5 R, and 52.5N-SR5, to be applied to subbases of roads in the United Kingdom with very discrete compressive strength, no greater than 1.7 MP compressive strength in 90 days) in this mixture in 20% cement and 80% ash, causes problems with gases created from the reaction of pure aluminum contained in this ash since it was not previously treated. In our case, we subjected this ash to an ageing process, wherein the aluminum remained oxidized, not showing any reaction or hydrogen detachment.

In the two samples used, mixing 80% of the ash 0-4 mm and 20% Portland cement 52.5 N-SR5 (resistance to the sulfides), the compressive strength under UNE standards was the following:
1st sample, the test piece ruptured after 90 days of compressive strength... 1.7 MP
2nd sample, the test piece ruptured after 90 days of compressive strength ... 1.74 MP

After these standard samples, we substituted 20% of 0-4mm ash for micronized glass, in the same percentage according to the previous description, maintaining 20% of cement of the standard sample, and this conglomerate resulted in an average density of 1.49 and a humidity of the mixture of 12% with the following results:
Compressive strength at 90 days
Sample of Test piece 1... 5.6 MP
Sample of Test piece 2... 5.3 MP

Here we may observe that with the substitution of 20% of the ash for micronized glass, we have more than tripled its compressive strength.

In the following test, we substituted 30% of 0-4 mm bottom ash for micronized glass, according to the previous conditions, maintaining 20% of cement of the standard sample, with the following results:
Compressive strength at 90 days
Sample of Test piece 1... 8.6 MP
Sample of Test piece 2... 8.2 MP

Here we may observe that we have more than tripled the compressive strength with the substitution of 30% glass for ash.

In the following test, we substituted 40% ash for micronized glass, with the following results:
Compressive strength at 90 days
Sample of Test piece 1... 10.8 MP
Sample of Test piece 2... 10.7 MP

Once again we have increased resistance more than seven-fold

### TEST SUMMARY (Test piece 1 sample)

**Table 1**

| Type of aggregate | Proportion of components (% in dry weight) | | | Moisture % of the mix | Density (g/cm3) | Compressive Strength (Mpa) |
|---|---|---|---|---|---|---|
| | Aggreagte / Slag | Micronized Glass | Cement | | | |
| 0/4 Sand | 80 | 0 | 20 | 12 | 1.43 | 1.7 |
| | 60 | 20 | | | 1.47 | 5.6 |
| | 50 | 30 | | | 1.49 | 8.6 |
| | 40 | 40 | | | 1.47 | 10.8 |

By way of example we have produced mortar in the laboratory, choosing a pozzolan, in this case glass, which alone meets with the condition of having more than 70% of the main oxides (SiO2, A1203, Fe2O3)

And using the following components:

**Table 2**

| Type of aggregate | Proportion of components (% in dry weight) | | | Moisture % of the mix |
|---|---|---|---|---|
| | Aggreagate / Slag | Micronized Glass | Cement | |
| 0/4 Sand | 40 | 40 | 20 | 12 |

The test piece was manufactured in a CBR mold without a spacer and was compacted by the Proctor compactor.
- 0/4 mm Cinders
- Micronized Glass
- Portland Cement
- Test piece (40% slag 0/4, 40% micronized glass, 20% cement, mixed with 12% moisture).

With this mortar we did the following tests:
- X-ray fluorescence,
- Electronic spectroscopy,
- X-ray diffraction:
   Results obtained for the X-ray fluorescence: The following table shows the composition of the component materials, of the test piece, and the theory of the test piece obtained by calculations based on the composition thereof:

**Table 3**

| Elements | Micronized Glass | Cement | Sand | Mortar | Calculation 40% micronized glass 40% sand 20% cement |
|---|---|---|---|---|---|
| H | 0.08841 | 0.3189 | 1.385 | 1.234 | 0.653 |
| O | 46.43 | 36.77 | 45.38 | 47.19 | 44.078 |
| Na | 9.538 | 0.1111 | 2.1 | 4.737 | 4.677 |
| Mg | 0.649 | 0.433 | 1.231 | 0.744 | 0.839 |
| Al | 1.06 | 2.721 | 8.061 | 3.163 | 4.193 |
| Si | 32.79 | 7.968 | 11.1 | 20.03 | 19.150 |
| p | 0.0084 | 0.021 | 1.12 | 0.345 | 0.456 |
| S | 0.0419 | 1.729 | 1.31 | 0.675 | 0.887 |
| CI | 0.02 | 0.017 | 2.322 | 0.627 | 0.940 |
| K | 0.635 | 0.941 | 1.31 | 0.844 | 0.966 |
| Ca | 8.269 | 46.74 | 19.3 | 17.98 | 20.376 |
| Ti | 0.0401 | 0.137 | 0.715 | 0.244 | 0.329 |
| Cr | 0.0578 | 0.0086 | 0.057 | 0.0459 | 0.048 |
| Mn | 0.0185 | 0.0306 | 0.268 | 0.189 | 0.121 |
| Fe | 0.243 | 1.919 | 2.995 | 1.408 | 1.679 |
| Co | | 0.00012 | 0.0048 | | 0.002 |
| Ni | 0.0019 | 0.0052 | 0.0162 | 0.0059 | 0.008 |
| Cu | 0.00561 | 0.0105 | 0.2568 | 0.102 | 0.107 |
| Zn | 0.00956 | 0.0236 | 0.7785 | 0.2405 | 0.320 |
| Rb | | 0.0048 | | | 0.001 |
| Br | | | 0.0116 | 0.0033 | 0.005 |
| Sr | 0.018 | 0.0537 | 0.0454 | 0.0324 | 0.036 |
| Zr | 0.0131 | 0.00828 | 0.0171 | 0.0146 | 0.014 |
| Sn | | | 0.0315 | 0.0228 | 0.013 |
| Ba | 0.052 | 0.032 | 0.119 | 0.0686 | 0.075 |
| Os | | | 0.00381 | 0.00203 | 0.002 |
| Pb | 0.0203 | | 0.0848 | 0.0526 | 0.042 |

Analysis of the results: The main elements that define each element are:
- Micronized glass is defined by sodium and silica, which also explains the quartz spikes in the X-ray diffraction of this product.
- Cement is the main component that provides calcium.
- And lastly, sand (cinders from the bottom of MSW incinerators) primarily provides aluminum and phosphorous.

The composition calculated is very similar to the theory.

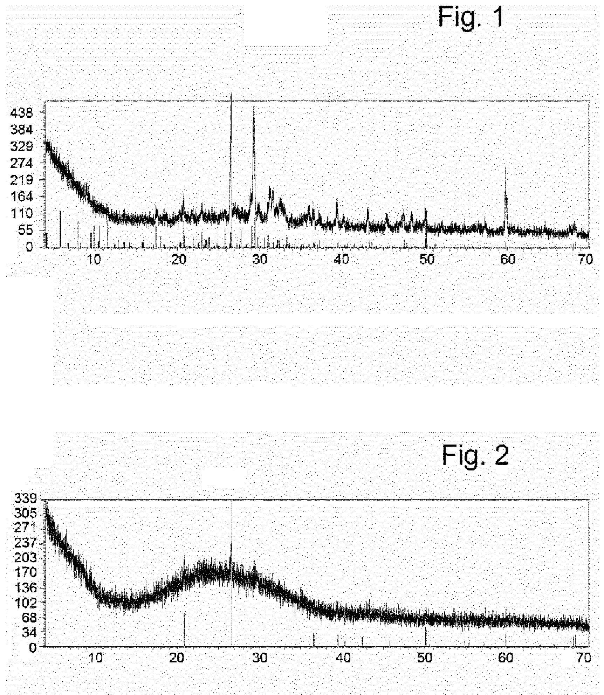

Likewise, we subjected it to an X-ray diffraction, which determines its basic structure and composition, trying to analyze the treated bottom ash, already in the form of slag 0-4 mm, we subjected it to an X-ray diffraction, the results are reflected in figure 1, on a sample of bottom ash 0-4 MM, which mainly contains silicates and aluminates of Ca, epistilbite, also called orizite (hydrated silica of Al and Ca), quartz and gypsum.

Figure 2 shows an X-ray diffraction of a primarily amorphous sample of micronized glass, wherein only spikes of quartz are recognized.

We have also subjected hydraulic mortar components, tested with an electron microscope, in order to analyze the final composition of the tested mortar based on the components of the elements which constitute the same, for which we performed the microscopy on the micronized glass of the previous test, the cinders of the bottom 0-4mm, and the cement used, as well as the spectra of each component and final mixture.

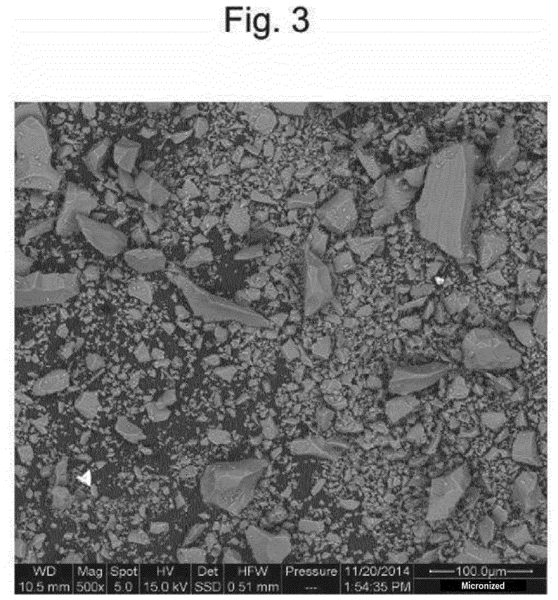

Figure 3 shows a general view of the appearance of a micronized sample of glass with amorphous characteristics and a constant chemical composition based on the results obtained by means of EDX, in which metallic oxides of Fe, Pb, Zn (grains with clearer tones).

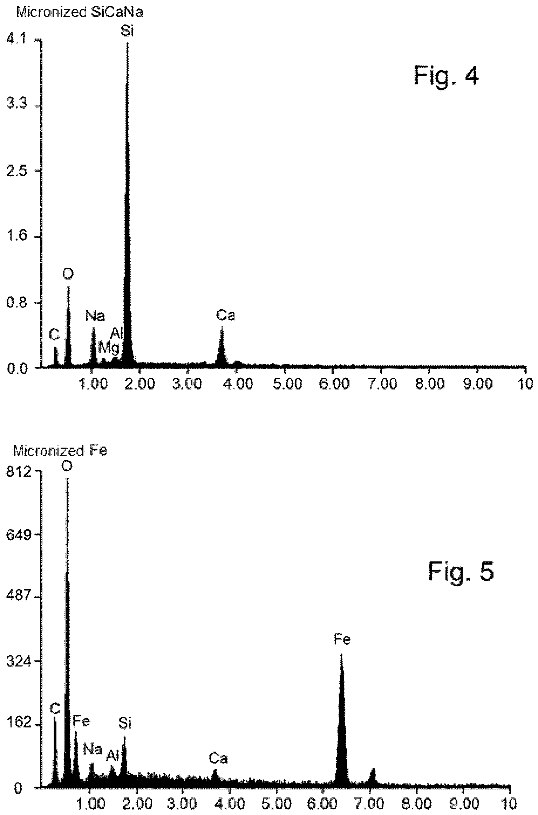

Figure 4 is a diagram of an EDX analysis of the glass used; while figure 5 is a diagram of an EDX analysis of the metallic oxides.

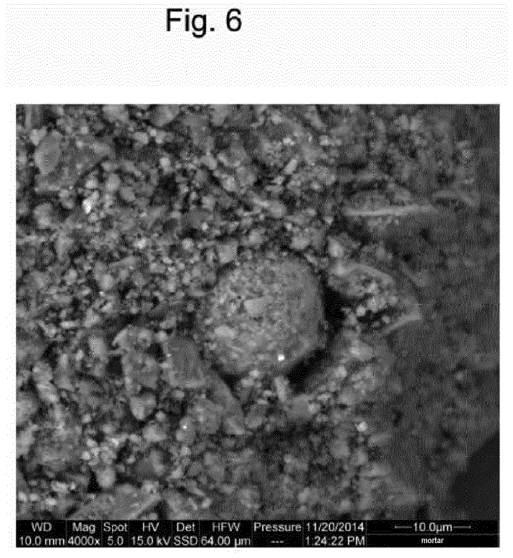

Figure 6 shows a general view of the appearance of the result of the analysis by means of scanning electron microscopy of the sample of micronized mortar, sand and cement.

Figure 7 is a diagram of the EDX spectra which shows the chemical composition of Ca and Na silicate, which act as cement in the mortar.

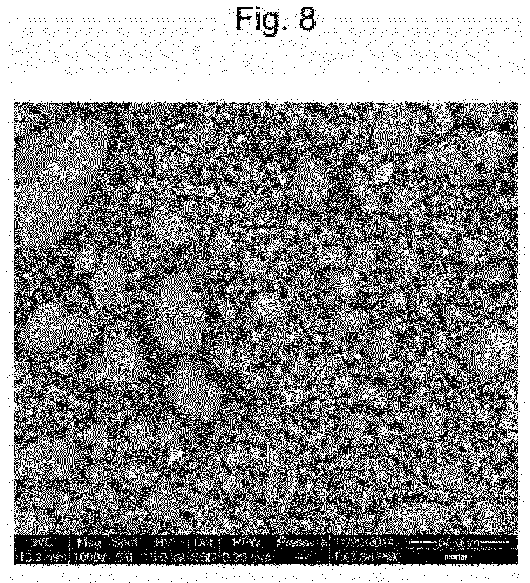

Figure 8 is a picture of mortar which contains micronized remains which did not react along with spheres coming from ash, organic material and oxides of Pb, Zn or Fe.

Figure 9 is an image of retrodispersed electrons of the mortar sample, wherein the neoformed minerals having strong cementing properties can be seen.

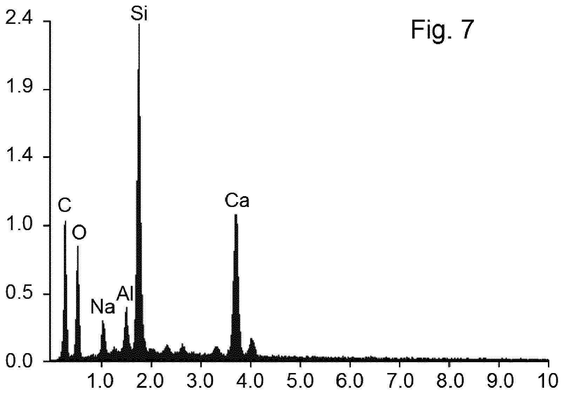

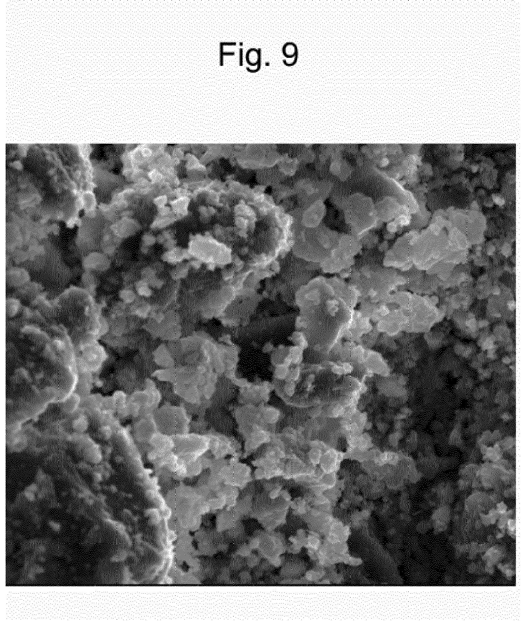

The chemical composition inferred based on the EDX spectra of this Ca and Na silicate is relatively constant and may be observed in figure 7. Likewise, in figure 9 one may observe the ADX spectra, in the composition of which the spheres of complex cementing phosphates appear, also neoformed in the mortar, surely by the action of the binder with regard to the components of the ash.

### Conclusions:

X-ray fluorescence is a valid method for determining the proportions of a mixture, if the components are known, or at least knowing the micronized proportion of a mixture, if the rest of the components do not have a high sodium content.

The electron microscopy shows the pozzolanic reaction between the micronized glass and portlandite released in the cement hydration. This pozzolanic reaction was produced with great intensity, since the neoformed mineral, sodium and calcium silicate (with a greater proportion of calcium than in the micronized glass) is the main cementing element, in addition to the cementing neoformations based on phosphorous.

### Analysis of the results:

The electron microscopy of the tested mixture detects a silicate rich in sodium as a neoformed mineral which is also a cementing material. The silicates produced by cement hydration do not contain sodium. As was previously mentioned, the calcium and sodium silicate of the test piece has a greater proportion of calcium than that of the micronized glass. Therefore, the sodium and calcium silicate of the test piece had to have formed from the sodium and calcium silicate and from the micronized glass and an extra amount of calcium, which is the demonstration of the pozzolanic reaction, which consists of the reaction between the silicates of the micronized glass and the calcium of the portlandite released in the cement hydration.

As was already mentioned, the types of pozzolans suitable for the invention may be classified as artificial and natural. In the former, we may mention: The previously treated bottom ash from the incineration of municipal solid waste, this milled slag is activated as pozzolan; fly ash: ash produced in the combustion of mineral coal (lignite), mainly in thermal power stations; clays artificially activated or calcined: for example, waste from fired clay bricks and other types of clay have been subjected to temperatures above 800 °C; slag from smelting: mainly from smelting of ferrous alloys in blast furnaces: this slag must be forcibly cooled in order to achieve an amorphous structure; Ash from agricultural waste: the ash of rice husk, bagasse and sugarcane straw. When they are conveniently burned, a waste mineral rich in silica and alumina is obtained, the structure of which depends on the combustion temperature, and/ or silica fume from industrial processes. Natural pozzolanic materials are made up mainly of eruptive rocks and, in particular, effusive and volcanic rocks, and within this group, extrusive rocks, with the exception of rocks of organic nature which formed through sediments.

These pozzolans, among others, can be used individually, mixed together, or mixed with micronized glass (which is a very reactive pozzolan) in different proportions, in turn mixed together with pure white or grey Portland Clinker.

The weight percentage distribution of the different materials which mix and/or are ground into microns, for the formation of hydraulic binder, will depend on the specific application for which it is intended to be applied, always seeking the most economic option of materials, with regard to the access thereof, prices and distance to the area in which they will be used.

The conglomerate which will be added to the ash may be composed of a large scale of percentages and components, as long as the pozzolans which will be used have 60% of the total main oxides of (SiO₂ , Al ₂O₃, Fe₂O₃), alone or mixed with others, including glass.

Bottom cinders conglomerated with micronized glass water, and Portland cement, or lime, either with the pozzolan or pozzolans selected according to the criteria of the present invention, among others, provide substantial advantages in limitless applications, for example:
- Artificial reefs. The possibility of building reefs with blocks manufactured with an agglomerate of ash, micronized glass and Portland cement has been studied. These studies have shown that the resistance of the blocks does not decrease after a year of exposure and in turn, the resistance of the Portland cement blocks in fact does. It has also been proven that there is no detachment of metals, since these remain confined in the cement matrix due to the compactness thereof by the pozzolan and the high alkalinity of the seawater.
- Infill concrete or grouting mortar.
- Use of bottom ash in the manufacturing of bricks.
- For the manufacturing of slabs, tiles, acoustic and insulating panels.
- They may be used in highways, embankments or precast concrete blocks.
- In the construction of roads and the leveling of highways
- In lightweight mortar or concrete.
- In the manufacturing of floors, on surfaces which due to their industrial activity are subjected to the effects of acids (meat industries, vegetable preserves industries and others).

## Claims

1. A mortar or concrete produced with a hydraulic binder, **comprising:**
- aggregates coming from cinders of the bottom of municipal waste incinerators and/or slurry from waste water treatment plants, or other natural or artificial aggregates, of different particle sizes depending of the use thereof as mortar or concrete;
- a binder composed of:
• Glass and/or other pozzolans, used individually, mixed together, or mixed with glass in different proportions;
• pure white or grey Portland Clinker, with gypsum (CaSO.2H₂O) or plaster of Paris (CaSO₄ .½H₂O) or resulting cements following the grinding thereof in different types; and/or
• optionally, depending on the amount of glass and or pozzolan, a strong base, preferably lime, which substitutes or complements Portland Clinker and cement derivatives;
all of the materials which make up the base of the binder being subjected to grinding, together or individually in similar particle sizes, and intimately mixed together until a conglomerate is obtained, together with the aggregates, with cementing mineral neoformations and a strong pozzolanic character.

2. The mortar or concrete according to the preceding claims, **characterized in that** the slag from the municipal waste incinerator or waste water treatment plants, or the limestone or silicon aggregates, either mixed with the slag or alone, are present in the total mixture in a proportion, in weight, comprised between 5% and 80%.

3. The mortar or concrete according to the preceding claims, **characterized in that** the different components of the binder are present in the total mixture, in weight, in the following proportions:
- Glass and/or other pozzolans in the different varieties thereof or the different mixtures of other pozzolans, or individually ... 5 to 80%;
- Clinker or Portland cement... 0 to 90%;
- Lime in its different forms... 0 to 40%.

4. The mortar or concrete according to the preceding claims, **characterized in that** the pozzalans used, either alone or mixed with others, even with glass, together have more than 60% of the total main oxides (of SiO2, A1203, Fe2O3) preferably more than 70%.

5. The mortar or concrete according to the preceding claims, **characterized in that** both the mixture of components of the hydraulic binder ground together, or separately, have a grain size comprised between 0.5 and 80 microns in the 90th percentile, optimal at 45 microns in the 90th percentile.

6. The mortar or concrete according to the preceding claims, **characterized in that** the pozzolans used are of an artificial origin, by-products of human activities, or natural, including the glass, mixed together or used individually in the mixture.

7. The mortar or concrete according to the preceding claims, **characterized in that** aggregates coming from cinders of the bottom of municipal waste incinerators and/or slurry from waste water treatment plants, are used as pozzolans, ground until reaching a grain size comprised between 0.5 and 80 microns in the 90th percentile, separate or together with the remaining components which make up the binder.

8. The mortar or concrete according to the preceding claims, **characterized in that**, in cases in which the binder does not include Portland cement or Portland Clinker, the relationship between the lime and pozzolans is comprised between 80/20 and 20/80.

9. The mortar or concrete according to the preceding claims, **characterized in that**, in the reaction produced, neoformed minerals are formed, specifically: portlandite, carbonate, calcium, complex cementing neoformations based on phosphates and calcium and sodium silicates which constitute the main cementing element.

10. The mortar or concrete according to the preceding claims, **characterized in that**, in the reaction produced, a cementing neoformation with a silicate rich in sodium is formed, which is not present in the reactions of Portland cement.

11. The mortar or concrete according to the preceding claims, **characterized in that** the phosphorous present mainly in the phosphates of the bottom ash in the reaction produced by the pozzolans is immobilized as a neoformed mineral.
